# FASCICULE DE BREVET EUROPEEN

(11) **EP 2 646 257 B1**
(45) Date de publication et mention de la délivrance du brevet: **06.04.2016**
(21) Numéro de dépôt: 11788893.3
(22) Date de dépôt: 02.12.2011
(51) Int. Cl.: B44C 1/17

(54) **PROCÉDÉ DE FABRICATION D'UN ARTICLE PERMETTANT L'APPOSITION D'UN FILM DÉCORATIF SUR UN SUPPORT DÉFINITIF**
VERFAHREN ZUR HERSTELLUNG EINES GEGENSTANDES ZUR BEFESTIGUNG EINER DEKORFOLIE AN EINEM ZIELSUBSTRAT
PROCESS FOR MANUFACTURING AN ARTICLE ENABLING A DECORATIVE FILM TO BE FIXED TO A FINAL SUPPORT

(30) Priorité: 02.12.2010 FR 1060043
(43) Date de publication de la demande: 09.10.2013
(73) Titulaire: Corso Magenta, 78170 La Celle Saint-Cloud (FR)
(72) Inventeur: CHEVALLIER, Stanislas, F-78170 La Celle Saint-Cloud (FR); DE DINECHIN, Jérôme, F-78000 Versailles (FR)
(74) Mandataire: Le Forestier, Eric
(86) Numéro de dépôt international: PCT/EP2011/071617
(87) Numéro de publication internationale: WO 2012/072794

(56) Documents cités:
- DE-A1- 10 018 103
- DE-A1-102007 016 794
- FR-A1- 2 881 681
- US-A1- 2006 165 979

## Description

L'invention concerne d'une façon générale les techniques de transposition ou transfert de couches décoratives.

On connaît déjà de nombreuses techniques pour transposer une couche décorative, par voie sèche ou humide.

Classiquement, la voie humide est la technique du papier peint ou de la décalcomanie, tandis que la voie sèche implique l'usage d'une couche d'adhésif sensible à la pression, éventuellement préservé jusqu'à utilisation par une pellicule pelable.

En général, ces techniques connues impliquent que la couche décorative elle-même soit sur un support présentant une certaine épaisseur, qui a pour effet, en général souhaité, de gommer les inégalités de la surface qui reçoit la couche décorative. En outre, ces techniques impliquent que l'aspect de la couche décorative soit défini à l'avance, en général sans possibilité de réaliser des décorations sur-mesure.

Pour pallier ces inconvénients, on a donc proposé des procédés de fabrication d'un article permettant notamment l'apposition d'un film décoratif sur un support. Par exemple, la demande FR 2 881 681 décrit un procédé de fabrication d'un article permettant notamment l'apposition d'un film décoratif sur un support, au cours duquel on applique successivement sur un support démoulable une couche de matière à peindre pour former un film, un adhésif désactivable puis un support poreux tel qu'un tissu permettant la désactivation à travers lui. L'adhésif engendre alors entre le film et le tissu des forces d'adhésion supérieures à celles existant entre le support démoulable et le film, de sorte qu'il est possible, par traction sur le tissu, d'extraire le film du support démoulable.

On obtient alors un film de peinture prêt à être appliqué sur un support définitif. Il suffit en effet de fixer la surface libre du film contre le support au moyen d'adhésifs conventionnels et de désactiver l'adhésif avec de l'eau à travers le tissu, de manière à pouvoir séparer le tissu du film tout en laissant le film contre le support définitif.

Néanmoins, ce procédé présente un certain nombre d'inconvénients ou limitations.

Tout d'abord, il est producteur de déchets et de co-produits, dans la mesure où, lorsque l'article est appliqué directement sur le support définitif en utilisant le support démoulable, ce support est souvent découpé de manière à adapter la forme de l'article au support définitif. Le support ne peut donc pas être récupéré. Or la qualité initiale du support de démoulage définit la qualité de l'état de surface final de l'article, de sorte que le coût global de fabrication de l'article augmente globalement avec le niveau de finition requis.

Par ailleurs, le support peut être difficile à recycler, en particulier à cause des produits utilisés dans l'ajustement de son état de surface ou de ses matériaux constitutifs, afin d'améliorer ses propriétés d'adhésion avec le film de peinture (tels que du PTFE, du silicone, etc.).

En outre, l'application d'un adhésif désactivable à l'eau sur le film est susceptible d'altérer la surface du film en provoquant des gonflements voire des migrations d'eau à travers le film vers le support moulant, et ce notamment en raison de la microporosité des matières à peindre. Par ailleurs, la mise en oeuvre de tels adhésifs laisse des traces sur la surface de la couche de matière à peindre, de sorte que le procédé requiert une étape supplémentaire de nettoyage de la surface.

L'invention vise donc à remédier à tout ou partie de ces inconvénients de l'état de la technique, et cherche en particulier à proposer un procédé de fabrication d'un article permettant notamment l'apposition d'un film décoratif sur un support qui respecte davantage l'environnement, qui soit simple, rapide et peu coûteux à mettre en oeuvre tout en obtenant un produit fini de meilleure qualité, c'est-à-dire ayant une finition de meilleure qualité, et ce sans nécessiter d'étapes supplémentaires de finition.

A cet effet, l'invention propose un procédé de fabrication d'un article permettant notamment l'apposition d'un film décoratif sur un support définitif, qui comprend les étapes suivantes :
- prévoir un support moulant présentant des caractéristiques de surface telles qu'une matière à peindre puisse être appliquée sous forme d'un film directement sur ledit support moulant, tout en engendrant après séchage du film de matière à peindre des premières forces d'adhésion contrôlées entre le support moulant et le film.
- appliquer au moins une couche de matière à peindre sur le support pour former un film, et amener cette couche à sécher,
- appliquer un support d'extraction sur la surface libre de la couche de matière à peindre, sans apport d'adhésif distinct dudit support, avec des deuxièmes forces d'adhésion contrôlées entre le film et le support d'extraction,
- exercer entre le support moulant et le support d'extraction un effort de séparation dans des conditions telles que les premières forces d'adhésion soient inférieures aux deuxièmes forces d'adhésion, de manière à peler l'ensemble formé par le support d'extraction et le film de matière à peindre,
- les deuxièmes forces d'adhésion après pelage étant telles que le film de matière à peindre est séparable du support d'extraction.

Certains aspects préférés mais non limitatifs du procédé de fabrication sont les suivants :
- la matière à peindre est séchée avant l'application du support d'extraction ;
- le support est réalisé dans un matériau choisi dans le groupe comprenant : le PFTE, le silicone, le polypropylène (PP), le polyéthylène (PE), le polyméthacrylate de méthyle (PMMA), le polystyrène (PS), le polycarbonate (PC), le polyéthylène téréphtalate (PET), les résines époxydes, le Polyacrylonitrile (PAN), le polyamide 66 (PA 66) ;
- il comprend en outre une étape d'ajustement des forces d'adhésion entre la couche de matière à peindre et le support moulant et/ou entre la couche de matière à peindre et le support d'extraction par traitement préalable du support ;

- l'étape d'ajustement est mise en oeuvre par une technique choisie dans le groupe comprenant : ionisation, traitement Corona, lance plasma, ajout d'un stéarate métallique, application de silicone ;
- les premières forces d'adhésion sont inférieures aux deuxièmes forces d'adhésion avant séparation ;
- il comprend en outre une étape d'ajustement des forces d'adhésion entre la couche de matière à peindre et le support moulant et/ou entre la couche de matière à peindre et le support d'extraction par déformation au cours d'un transport de la couche de matière à peindre portée par le support ;
- le support d'extraction est un film plastique intégrant un adhésif présentant une pégosité déterminant les deuxièmes forces d'adhésion ;
- le support d'extraction est appliqué par lamination ou par calandrage sur la couche de matière à peindre ;
- le support d'extraction est réalisé dans un matériau présentant des propriétés d'adhésion limitées en présence de chaleur, et l'application dudit support sur le film est réalisée dans une calandre chauffante à une température inférieure à une limite prédéterminée ;
- comprend en outre une étape préalable d'impression du support d'extraction (30) avec une encre sublimable, ladite encre étant transférée sur le film de matière à peindre sous l'effet de la calandre chauffante ;
- il comprend en outre une étape de finition de la surface visible de l'article ;
- l'étape de finition comprend une opération choisie dans le groupe suivant : impression, traitement de surface, insolation par ultraviolets ;
- il comprend en outre le recyclage du support moulant pour une nouvelle mise en oeuvre du procédé ;
- il comprend en outre une étape d'application d'une pellicule de protection pelable sur la face libre de l'ensemble opposée au support d'extraction ;
- la pellicule de protection pelable est fixée au moyen d'un adhésif ;
- l'adhésif est choisi dans le groupe comprenant les adhésif activables et les adhésifs présentant sans activation une pégosité déterminée ;
- la pellicule de protection pelable est réalisée dans un matériau choisi pour avoir un impact environnemental limité ;
- la pellicule de protection pelable comprend au moins l'un des matériaux du groupe suivant : amidon de pomme de terre, polyoléfine recouverte d'un adhésif acrylique, acide polylactique (PLA), fibres de cellulose ;
- il comprend en outre une étape d'application d'un second support d'extraction sur la face libre de l'ensemble opposée au support d'extraction, ledit second support d'extraction présentant des troisièmes forces d'adhésion contrôlées avec le film ;
- il comprend en outre une étape de retrait du support d'extraction en exerçant entre les deux supports d'extraction un effort de séparation dans des conditions telles que les deuxièmes forces d'adhésion entre le support d'extraction et le film soient inférieures aux troisièmes forces d'adhésion entre le second support d'extraction et le film, de manière à peler l'ensemble formé par le second support d'extraction et le film de matière à peindre, les troisièmes forces d'adhésion après pelage étant telles que le film de matière à peindre est séparable du second support d'extraction ;
- il comprenant en outre une étape d'application d'une deuxième pellicule pelable sur la face du film dégagée par le retrait du support d'extraction ;
- la deuxième pellicule de protection pelable est réalisée dans un matériau choisi pour avoir un impact environnemental limité ;
- la deuxième pellicule de protection pelable comprend au moins l'un des matériaux du groupe suivant : amidon de pomme de terre, polyoléfine

recouverte d'un adhésif acrylique, acide polylactique (PLA), fibres de cellulose ;
- il comprend en outre un recyclage du second support d'extraction pour une nouvelle mise en oeuvre du procédé ;

Selon un deuxième aspect, l'invention propose un procédé d'application d'un article obtenu par le procédé conforme à l'invention sur un support définitif, comprenant les étapes suivantes :
- appliquer un adhésif sur le support définitif et/ou sur la face libre de l'article,
- appliquer la face de l'article contre le support définitif, et
- maroufler l'article contre le support.

Selon un dernier aspect, l'invention propose un procédé d'application d'un article obtenu par un procédé conforme à l'invention sur un support définitif, comprenant les étapes suivantes :
- retirer la pellicule pelable,
- appliquer un adhésif sur le support définitif et/ou sur la face de l'article qui était en contact avec la pellicule pelable,
- appliquer la face de l'article contre le support définitif, et
- maroufler l'article contre le support.

D'autres caractéristiques, buts et avantages apparaîtront mieux à la lecture de la description détaillée qui va suivre, et en regard des dessins annexés donnés à titre d'exemples non limitatifs et sur lesquels :
Les figures 1A à 1 D représentent la structure d'une première forme de réalisation d'un article au cours des différentes étapes d'un procédé de fabrication conforme à l'invention,
La figure 2 représente la structure d'une deuxième forme de réalisation d'un article obtenu après mise en oeuvre d'une étape supplémentaire du procédé des figures 1A à 1 D,
Les figures 3A et 3B représentent la structure d'une troisième forme de réalisation d'un article obtenu après mise en oeuvre d'une étape supplémentaire du procédé des figures 1A à 1 D,
La figure 4 représente la structure d'une quatrième forme de réalisation forme de réalisation d'un article obtenu après mise en oeuvre d'une étape supplémentaire du procédé des figures 3A et 3B,
La figure 5 représente un exemple de chaîne de fabrication sur lequel il est possible de mettre en oeuvre un procédé conforme à l'invention, et

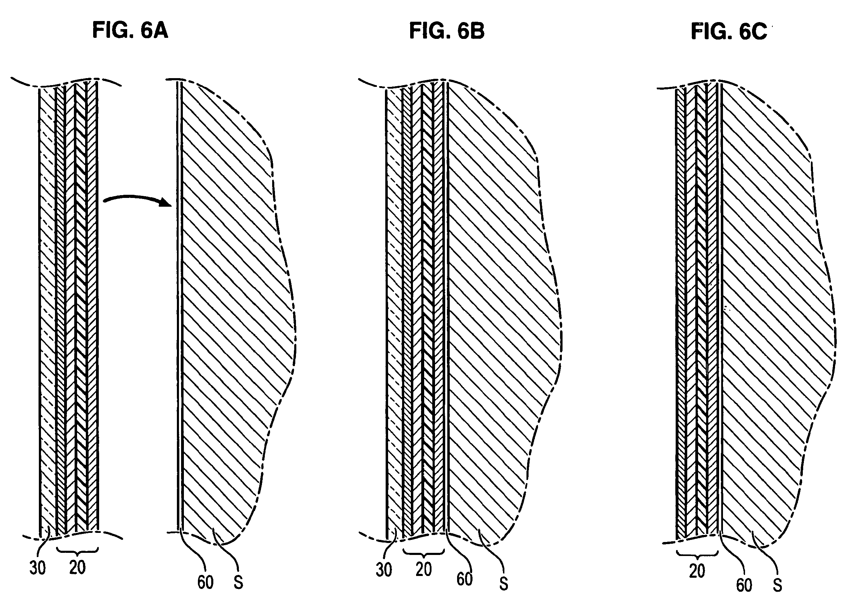

Les figures 6A à 6C représentent un exemple de procédé d'application de l'article de la figure 1 D sur un support définitif.

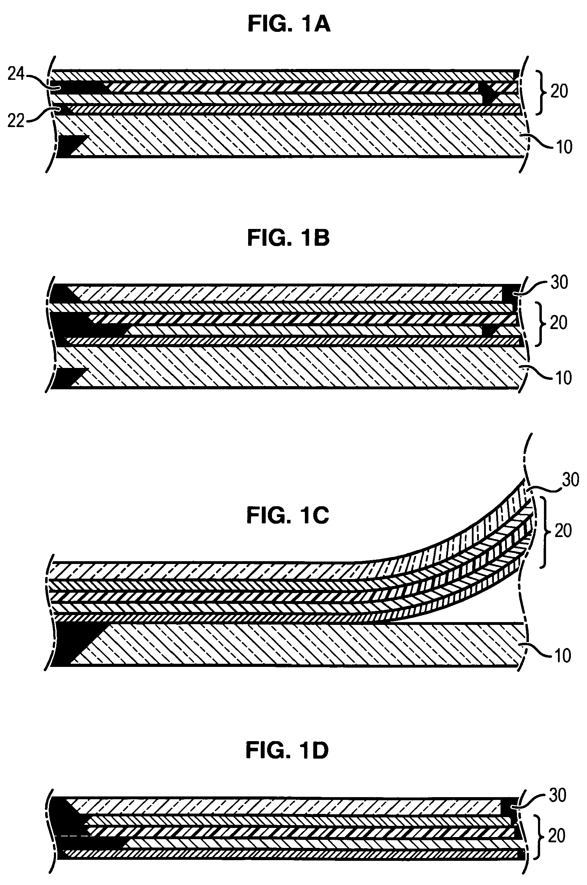

En référence aux figures et tout d'abord aux figures 1A à 1D, on va décrire un procédé de fabrication d'un article 1 selon un premier mode de réalisation de l'invention.

On prévoit tout d'abord un support moulant 10. Le support moulant 10 est adapté pour assurer la cohésion mécanique de l'article 1 au cours des phases de fabrication et conférer à la couche visible de l'article 1 une finition de surface recherchée.

Les couches formant l'article 1 sont appliquées sur le support moulant 10, qui peut être plat ou comporter des motifs en relief.

Ce support 10 est réalisé de préférence dans un matériau ayant des caractéristiques de surface telles qu'une matière à peindre 20 puisse être appliquée sous forme d'un film directement sur ledit support moulant 10, tout en engendrant après séchage du film de matière à peindre des premières forces d'adhésion contrôlées entre le support moulant 10 et le film.

Il peut s'agir de téflon (PFTE), de silicone, de polypropylène (PP), de polyéthylène (PE), de polyméthacrylate de méthyle (PMMA), du polystyrène (PS), du polycarbonate (PC), de polyéthylène téréphtalate (PET), d'époxyde, de Polyacrylonitrile (PAN), ou encore de polyamide 66 (PA 66). On privilégie en particulier les matériaux ayant une énergie de surface inférieure ou égale à 40 mJ/m², c'est-à-dire typiquement le téflon (19 mJ/m²), le silicone (22 mJ/m²), le PMMA (mJ/m²), les polyoléfines (polyéthylène (33 mJ/m²), et plus particulièrement le polypropylène (30 mJ/m²)).

Le support moulant 10 peut en outre être constitué d'une feuille dite « papier moulant » (« casting paper » en terminologie anglo-saxonne), qui peut être un papier siliconé, un papier traité par une application de stéarate de chrome, ou encore un papier couché polypropylène (PCP).

En variante, le support 10 est réalisé dans du bois, du cuir, un moule usiné, etc. sur lesquels est appliqué un revêtement mince à faible énergie de surface (typiquement, un revêtement réalisé dans l'un des matériaux cités précédemment) de manière à permettre l'application de la couche de matière à peindre 20. Par exemple, le support moulant peut être réalisé en bois sur lequel est laminé un revêtement en polypropylène d'une dizaine de microns d'épaisseur : on obtient alors un support moulant ayant une énergie de surface sensiblement égale à celle du polypropylène (de l'ordre de 40 mJ/m²) tout en reproduisant les reliefs naturels du bois, au micron près.

Typiquement, le support moulant 10 a une épaisseur allant de 40 µm à 500 µm, de préférence de 100 µm à 300 µm, selon la composition de la matière à peindre 20 utilisée, sa destination et son épaisseur.

Une surface du support 10, dite surface moulante, peut être apprêtée pour en adapter la mouillabilité (et donc l'énergie de surface) et/ou les reliefs de surface, de telle sorte que d'une part les couches déposées sur cette surface aient une cohésion adaptée pour être avoir un aspect final homogène suite à leur séchage, et d'autre part que leur démoulage soit facilité.

Par exemple, selon le type de support moulant 10 utilisé, le procédé comprend en outre une étape au cours de laquelle la surface moulante du support 10 est traitée de manière à ajuster son énergie de surface, et donc son degré d'adhérence. Typiquement, pour un support ayant une faible mouillabilité (tel qu'un papier siliconé), il peut s'avérer nécessaire de traiter la surface de manière à augmenter son énergie de surface, par exemple par ionisation, traitement Corona ou lance plasma. En revanche, pour un support ayant une forte mouillabilité, il peut s'avérer nécessaire de traiter la surface de manière à diminuer son énergie de surface, par exemple par ajout d'un stéarate métallique (tel que du de stéarate de chrome), application de silicone, etc.

On applique ensuite sur cette surface moulante du support moulant 10 une matière à peindre 20 (figure 1A) de matière à former un film décoratif.

La couche de matière à peindre 20 comporte une ou plusieurs couches de peinture, vernis, ou autre, étalées sur le support. Les matériaux et les couleurs des couches composant la matière à peindre 20 peuvent être identiques ou différents, selon l'effet souhaité. La superposition de couches dans la couche de matière à peindre 20 améliore son opacité, son pouvoir couvrant et peut éventuellement modifier la réaction de la matière à la lumière extérieure en fonction de ses caractéristiques, i.e. que la lumière soit directe, indirecte, forte, faible, etc.

La couche de matière à peindre 20 peut également jouer le rôle d'une barrière ionique pour protéger le support le lequel est appliqué l'article1 ou le milieu ambiant. Par exemple, lorsque le support définitif S est une paroi comportant du Plomb, l'application de l'article en feuille 1 permet de créer une barrière empêchant la migration des ions vers la surface, la couche de matière à peindre 20 étant déjà sèche au cours de la pose. L'application préalable d'une couche de protection spécifique devient donc optionnelle.

On entend ici par « matière à peindre » différents types de matériaux appliqués sous forme de liquide, de gel, etc. Cela peut être une peinture mono- ou multi-composants de nature acrylique, styrène acrylique, polyuréthane bi-composant ou époxyde, glycérophtalique ou être spécifique au type de support définitif S.

Typiquement, la quantité de matériau formant la couche de matière à peindre 20 se situe dans une gamme allant de 5 à 150 g/m², voire des valeurs sensiblement plus élevées dans le cas où la matière à peindre inclut des éléments solides.

De façon classique en soi, lors de l'application en plusieurs couches, on attend un durcissement suffisant de la couche appliquée avant d'appliquer la couche suivante.

On peut choisir tout mode d'application approprié et notamment à l'aide d'une machine d'enduction à rideau, à léchage (« kiss coating » en terminologie anglo-saxonne), par trempage et/ou à barre de Meyer ou à racle, ou encore mécaniquement ou manuellement à la brosse, au rouleau ou au pistolet.

De préférence, dans le cas d'une peinture acrylique uniforme, l'épaisseur moyenne d'une couche de peinture est comprise entre environ 5 et 70 µm (à sec).

Le séchage, le durcissement et/ou la prise complets de la couche de matière à peindre 20 ainsi réalisée peuvent varier en fonction du type de matière à peindre 20 et du résultat souhaité.

Selon une première forme de réalisation, la couche 20 est séchée à l'air libre ou à l'air forcé, afin d'évaporer le solvant présent dans la matière à peindre 20. Elle peut alors se stabiliser et solidifier par coalescence.

La couche de matière à peindre 20 peut en outre subir une étape de réticulation. Il peut alors s'agir alors d'une réticulation thermique (par apport de chaleur dans un four, sous une rampe infrarouge, etc.), d'une réticulation chimique (sous l'action d'un durcisseur), ou encore d'une réticulation par irradiation par un faisceau ultraviolet.

Bien entendu, les phénomènes de réticulation de la couche de matière à peindre ont de préférence lieu suite à une première étape de séchage.

La réticulation permet d'augmenter les propriétés mécaniques d'une couche de peinture réticulable ainsi que sa résistance, notamment à l'eau et aux solvants (la rendant par exemple ainsi adaptée à l'utilisation dans le cadre de matières à peindre anti-graffitis), en réduisant son énergie de surface. Néanmoins, cette faible énergie de surface rend également difficile l'application de nouvelles couches par-dessus la couche de peinture réticulée et limite leur cohésion. Par conséquent, lorsque la couche de matière à peindre 20 comprend une peinture réticulable ayant une faible vitesse de réticulation (de l'ordre de plusieurs heure, voire plusieurs jours), typiquement une peinture à base de polyuréthane ou d'époxyde bi-composant, on applique de préférence les nouvelles couches de matière à peindre avant la réticulation de la couche de peinture réticulable. En effet, lorsque la couche réticulable n'est pas encore réticulée, elle peut complexer avec la couche nouvellement appliquée en formant des liaisons physico-chimiques de haute énergie. Ainsi, une fois réticulées, les différentes couches adhérent les unes aux autres et présentent une très bonne cohésion.

On applique ensuite sur la face libre du film de peinture un support d'extraction 30 (figure 1 B). Ce support d'extraction 30 est adapté pour, d'une part, protéger la surface libre de la couche de matière à peindre 20, et d'autre part permettre l'extraction du film du support moulant 10, sans recours à un adhésif distinct. Pour cela, le support d'extraction 30 présente des forces d'adhésion contrôlées avec le film de sorte que les forces d'adhésion avec le film soient supérieures à celles existant entre le film et le support moulant 10 au moment de l'extraction, et permette un retrait du support moulant 10 sans altération du film de matière à peindre.

Par ailleurs, après pelage de l'ensemble composé du support d'extraction et du film, les forces d'adhésion entre le film et le support d'extraction doivent être telles que le film de matière à peindre 20 est séparable du support d'extraction 30.

De préférence, le support d'extraction 30 est réalisé dans un matériau formant barrière à la migration d'espèces ou d'éléments vers la couche de matière à peindre 20, en la protégeant de l'environnement extérieur.

Le support d'extraction 30 peut être appliqué sur le film dans une calandreuse ou un laminateur, à froid ou à chaud selon le type de support 30 utilisé.

Dans une première forme de réalisation, le support est un film plastique de type polypropylène intégrant un adhésif ayant une pégosité ("tack" en terminologie anglo-saxonne) adaptée pour que les forces d'adhésion entre le film et le support temporaire puissent être amenées à un niveau supérieur à celles entre le film et le support moulant 10. En variante, le support d'extraction 30 est réalisé dans un matériau présentant intrinsèquement des propriétés d'adhésion en présence de chaleur, typiquement un matériau à faible température de fusion tel que l'acide polylactique (PLA). Dans les deux cas, il n'est pas donc nécessaire d'ajouter un adhésif entre la couche de matière à peindre 20 et le support 30.

Dans cette forme de réalisation, le support d'extraction 30 est de préférence appliqué sur le film dans une calandre chauffante. Typiquement, pour un support 30 en PLA dont la température de transition vitreuse est de 60°C et dont la température de fusion de 150 °C, la calandre est portée à une température de l'ordre de 90°C.

Dans tous les cas, on préfère un support d'extraction 30 réalisé dans un matériau ayant une faible valeur économique et/ou un faible impact environnemental. Ceci n'est cependant pas limitatif.

Optionnellement, on peut effectuer au préalable sur le support d'extraction 30 une impression à l'aide de produits transférables tels que des encres sublimables . Lors de l'opération de laminage ou de calandrage à chaud, l'encre se transfèrent sur la surface de la peinture, formant des motifs.

Optionnellement, et comme illustré sur les figures, la couche de matière à peindre 20 peut être composée d'une ou plusieurs couches additionnelles, conférant à l'article des propriétés ou fonctionnalités particulières liées notamment à ses conditions d'utilisation, le milieu auquel il est exposé, le type de support définitif S sur lequel il est appliqué, les fonctions qu'il peut avantageusement remplir, etc.

De telles couches additionnelles sont appliquées entre le support moulant 10 et le support d'extraction 30. Plus précisément, les couches additionnelles peuvent être appliquées directement sur le support 10, entre les couches composant la couche de matière à peindre 20 ou par-dessus la couche de matière à peindre 20, de manière adjacente au support d'extraction 30.

L'article peut comporter une pluralité de couches additionnelles différentes réparties dans son épaisseur.

On peut classer les couches additionnelles en deux grandes catégories : les couches nommées superficielles 22, qui sont destinées à être en contact avec l'extérieur, du côté opposé au support définitif S par rapport au film décoratif, et qui sont appliquées entre le support moulant 10 et la couche de matière à peindre 20 ou entre le support d'extraction 30 et la couche de matière à peindre 20 (selon la face de l'article qui est appliquée sur le support définitif S), et les couches nommées intermédiaires 24, qui se trouvent au sein de la matière à peindre 20.

La couche superficielle 22 peut consister en une ou plusieurs couches parmi les couches suivantes : une couche de vernis, une couche ayant un aspect décoratif, et/ou une couche ayant des propriétés physico-chimiques particulières.

Par exemple, la couche de vernis peut être une couche de type acryle adaptée pour faciliter le retrait du support (moulant 10 ou temporaire 30), notamment lorsque les caractéristiques d'adhésion de la couche décorative, c'est-à-dire de la couche inférieure composant la couche de matière à peindre 20, sont trop importantes pour permettre un retrait propre du support. Le vernis peut également apporter une fonction de barrière UV ou des fonctions anti-graffiti. Des exemples de vernis utilisables sont : les résines alkyde en phase aqueuse, les polymères en phase aqueuse, les résines polyuréthanes en phase aqueuse, les alkydes uréthane en phase solvantée, ou encore les dispersions de résines acrylique en phase aqueuse.

La couche ayant un aspect décoratif peut être composée de particules colorées, de particules ayant un volume permettant de lui conférer un relief donné (notamment des microbilles de verre de diamètre typiquement inférieur à 0,5 mm), etc. éventuellement mélangées à une couche de peinture translucide ou de vernis.

La couche ayant des propriétés physico-chimiques particulières a notamment pour rôle de protéger la surface de l'article (de par sa dureté, sa résistance aux rayures ou autres propriétés physiques), d'améliorer son interaction avec le milieu extérieur et/ou de réagir avec le milieu extérieur.

Elle peut par exemple conférer à la couche superficielle 22 un aspect décoratif fonction des conditions extérieures. Il peut s'agir typiquement d'une couche changeant d'aspect (couleur, brillance, texture, etc.) en fonction de la température, de la lumière (tels que des particules fluorescentes, luminescentes, rétro-réfléchissantes, etc.), de l'humidité, de la présence d'éléments chimiques ou biologique déterminés, etc.

Elle peut également protéger le film, par exemple en le préservant des agressions dues à la pénétration de l'eau et/ou des graisses (cas d'une couche oléofuges - on obtient alors un article 1 ayant des propriétés antitaches, anti-graffitis, etc. ) ou avoir une dureté supérieure à la dureté de la couche de matière à peindre 20 (et accroître la résistance de l'article aux chocs et aux rayures).

Selon un autre exemple de réalisation, la couche ayant des propriétés physico-chimiques particulières peut être formée d'une peinture microstructurée adaptée par exemple au milieu nautique, du type « peau de requin » ou, en milieu aéronautique, comportant des stries longitudinales d'une dimension caractéristique de 25 micromètres.

Selon un autre exemple, la couche additionnelle peut recevoir des micro-stries lui conférant des propriétés optiques de type lentille ou miroir de Fresnel.

Enfin, la couche peut comporter des éléments ayant des effets sur le milieu auquel ils sont exposés (diffusion de substances biologiques ou chimiques par exemple). Notamment, ces éléments peuvent être adaptés pour réagir avec des composés organiques volatils (c'est le cas par exemple des zéolithes ou du TiO² sous forme anatase qui en présence de lumière a un effet catalytique de destruction des COV), être des agents antifongiques, ou encore des agents antisalissures (dits « agents antifouling ») adaptés pour protéger les surfaces immergées des navires, etc.

Selon une seconde forme de réalisation éventuellement en complément de la première, la couche additionnelle est une couche intermédiaire 24 sous-jacente à la couche superficielle 22, et confère à l'article des propriétés supplémentaires par rapport aux articles connus. Cette couche comprend une ou plusieurs couches ayant des propriétés physico chimiques, jouant le rôle de barrière ou de renfort, ou peut être une couche conductrice.

Par exemple, la couche intermédiaire 24 est adaptée de manière à empêcher la migration ionique de substances indésirables telles que le Plomb ou tout autre élément toxique. Elle peut être constituée d'une résine qui après polymérisation apporte une étanchéité, ou par un film constitué d'une matière comme le polyéthylène, le polyester, le polypropylène, le polystyrène. Ce film est traité pour avoir une énergie de surface élevée, ou est muni d'un primaire d'accrochage de sorte qu'il adhère aux couches qui lui sont voisines.

Selon une autre variante encore, la couche intermédiaire 24 est une armature adaptée pour renforcer la résistance de l'article et le rendre éventuellement autoporteur, permettant ainsi de retirer le support 10 après séchage des couches formant l'article 1 afin de faciliter son stockage.

Un autre avantage de cette couche de renforcement 23 est de faciliter l'utilisation de l'article 1 selon l'invention dans le cas des rénovations sur support anciens et détériorés.

La couche de renforcement comprend par exemple un voile de verre, un tissu de verre, des fibres de verre et/ou des fibres métalliques ou végétales, un film plastique, un non-tissé, un textile ou tout autre élément permettant de rigidifier la couche de matière à peindre 20 tout en conservant son adaptabilité à le support définitif S sur laquelle l'article 1 va être collé.

Selon une autre forme de réalisation, la couche intermédiaire 24 est une couche conductrice (ou éventuellement semi-conductrice), et est en contact avec la couche de matière à peindre 20. Elle peut être prise entre deux couches électriquement isolantes.

Un tel article 1 peut alors être utilisé dans la récupération d'énergie, ou au contraire dans la diffusion d'énergie par éclairage ou par chauffage.

Elle peut en outre avoir des propriétés de diffusion de son, de diffusion électromagnétique, de protection par effet de cage de faraday, des propriétés ferromagnétiques permettant de retenir un élément aimanté.

Par exemple, la couche conductrice peut être une couche de peinture conductrice, ou comporter des éléments conducteurs (oxydes d'étain, fibres métalliques éventuellement mélangées à des fibres de verre, un réseau de fils résistifs, une feuille métallique, etc.), un polymère conducteur.

Il peut s'agir également d'un laminé de revêtements ayant des propriétés photovoltaïques, par exemple deux couches semi-conductrices dopées N et P respectivement et placées entre deux couches destinées à collecter les électrons émis par les couches semi-conductrices.

L'ensemble formé par le support d'extraction 30, le film et le cas échéant les couches superficielles 22 et/ou intermédiaires 24 est ensuite séparé du support moulant 10, Pour cela, on exerce exercer un effort de séparation entre le support et le support d'extraction dans des conditions telles que les forces d'adhésion entre le film et le support moulant 10 soient inférieures aux forces d'adhésion entre le film et le support d'extraction 30, de manière à peler l'ensemble.

Cette opération peut par exemple être réalisée sur la même chaîne que celle de l'application du support d'extraction 30.

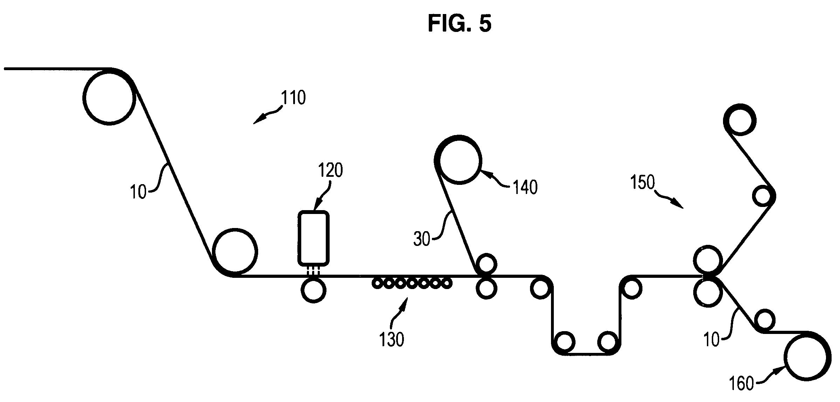

Un exemple de chaîne de fabrication 100 est illustré en figure 5. Cette chaîne comprend un premier ensemble de rouleaux 110 adapté pour amener le support moulant 10, un poste d'enduction 120 pour appliquer la couche de matière à peindre, un poste de séchage 130 de la matière à peindre, d'accostage 140 du support d'extraction, adapté pour appliquer le support d'extraction sur le film de matière à peindre, et un poste de séparation 150 de l'ensemble formé par le support d'extraction 30 et le film du support moulant 10. Le support moulant 10 est alors enroulé autour d'une bobine 160 pour une éventuelle réutilisation ultérieure.

Un exemple de séparation du support moulant 10 et de l'ensemble est illustré sur la figure 1C. Dans cette forme de réalisation, on exerce sur le support d'extraction 30, en commençant par un bord, une traction en s'éloignant du plan du support moulant 10, et l'on observe alors un décollement entre le film et support 10, dont les forces d'adhésion sont ou ont été ajustées à une valeur inférieure à celles existant entre ledit film et le support d'extraction 30. Ce décollement s'effectue de façon continue et sans détérioration de la couche de peinture et après achèvement de cette opération, on obtient l'ensemble constitué par le support d'extraction 30 et le film de peinture, non altéré (absence de fissures, de craquelures ou de zones où la peinture est manquante).

La déformation au cours du transport de la couche de matière à peindre portée par le support 30, en particulier en raison du diamètre et de l'agencement des rouleaux mis en oeuvre dans le pelage du support moulant 10, peut faciliter la séparation. L'homme du métier saura bien entendu choisir la géométrie des rouleaux (diamètre, agencement), leur pilotage (pression appliquée, vitesse de rotation), leur nature, etc. en fonction des matériaux utilisés pour le support moulant 10 et le support d'extraction, et en particulier l'évolution des forces d'adhésion entre les supports 10, 30 et le film lors des flexions imparties aux différentes couches par les rouleaux.

L'article comportant le film et le support d'extraction 30 (figure 1 D) est alors autoporteur et est prêt à être utilisé dans la décoration d'un support définitif S tel qu'une paroi, un meuble, une carrosserie de véhicule, etc. Il peut alors être découpé selon les besoins et/ou conditionné sous forme de panneaux ou de rouleaux, de rubans, de patches pour réparations, ou encore être appliqué et vendu sur une plaque de plâtre.

On comprendra par ailleurs que, dans cette forme de réalisation, lors de l'application de l'article 1, c'est la face initialement protégée par le support moulant 10 qui est appliquée contre la surface du support définitif S, tandis que la face protégée par le support d'extraction 30 constitue la face visible.

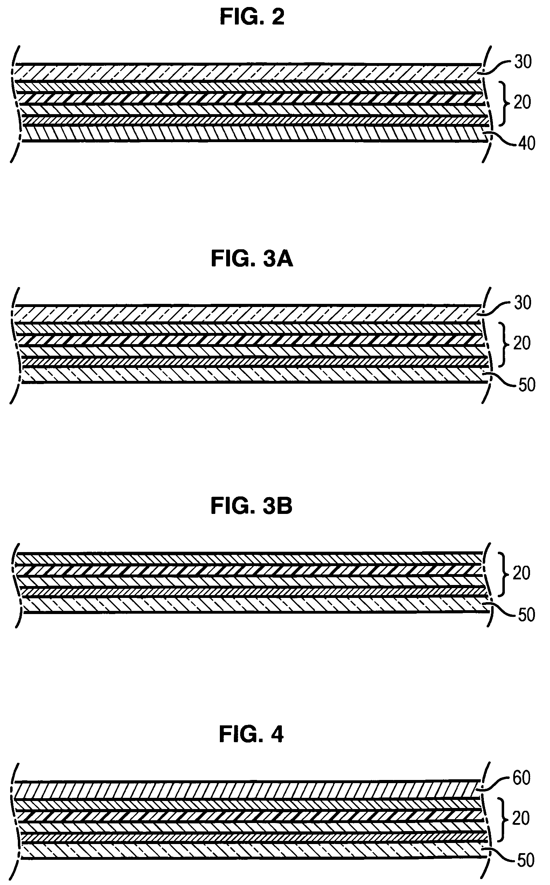

De manière optionnelle, on peut en outre appliquer une pellicule de protection pelable 40 sur la face libre du film, à la place du support moulant 10 (figure 2). Cette pellicule 40 a pour rôle de protéger le film de l'environnement extérieur et est réalisée dans des matériaux conventionnels, ou en variante dans un matériau ayant une faible valeur économique et/ou un faible impact environnemental. Elle doit en outre être pelable, c'est-à-dire qu'elle doit présenter une adhérence limitée avec le film et doit pouvoir être retirée sans endommager le film ni laisser de traces. L'adhésion entre la pellicule 40 et le film peut être obtenue notamment par application de quelques grammes par mètre carré d'un adhésif sensible à la pression et/ou à la température, ou directement par des films ayant une température de fusion suffisamment faible pour pouvoir adhérer au film lors d'un calandrage à chaud à une température peu élevée, typiquement inférieure à 100°C.

Pour cela, la pellicule 40 peut être réalisée dans de l'amidon de pomme de terre, du polypropylène (PP) de préférence non bi-orienté recouvert d'un adhésif acrylique (qui constitue un déchet valorisable), du PLA issu de matière d'origine renouvelable et biocompostable (par exemple le produit Bioplast^{®} GS 2189, commercialisé par la société Biosphere, 3 rue Scheffer, 75116 PARIS, France, qui contient une large proportion d'amidon de pomme de terre), un film plastique, des fibres de papier etc. On peut noter que le support d'extraction 30 peut de la même manière être constitué de ces types de produits.

Cette forme de réalisation permet donc de garantir à un utilisateur final que le produit présente un aspect de haute qualité, dans la mesure où il est protégé par le support d'extraction 30 et le cas échéant par la pellicule 40 jusqu'au moment de l'application, et génère par ailleurs peu de pertes avec un très faible impact environnemental.

Selon une forme de réalisation, la pellicule 40 peut constituer la pellicule de protection temporaire (« release » en terminologie anglo-saxonne) d'un adhésif, et est appliquée en même temps que l'adhésif en question, dans des conditions (à froid ou à chaud) telles que l'adhésif adhère ensuite davantage au film 20 qu'à la pellicule 40, selon un procédé par exemple dérivé de la fabrication des autocollants en film plastique.

Dans cette forme de réalisation, on applique de préférence la face protégée par la pellicule pelable 40 contre le support définitif S, la face visible correspondant à la face protégée par le support d'extraction 30.

Avantageusement, étant donné que la face visible de l'article 1 correspond à la face ayant séché à l'air libre, l'article 1 peut alors subir des réparations ultérieures par application locale de peinture liquide (notamment pour la finition des joints entre deux articles, etc.).

En variante, le procédé comporte en outre une étape d'application d'un second support d'extraction 50 sur la face libre du film, à la place du support moulant 10 (figure 3A).

De préférence, le second support d'extraction 50 est réalisé dans un matériau similaire au support d'extraction 30, et présente des forces d'adhésion contrôlées avec le film.

On exerce ensuite entre les deux supports 30 et 50 un effort de séparation dans des conditions telles que les forces d'adhésion entre le film et le support d'extraction 30 soient inférieure aux forces d'adhésion entre le film et le second support d'extraction 50, de manière à peler l'ensemble formé par le support d'extraction 50 et le film de matière à peindre 20.

A nouveau, ce décollement s'effectue de façon continue et sans détérioration de la couche de peinture et, après achèvement de cette opération, on obtient un ensemble formé du film de matière à peindre 20 et du second support d'extraction 50, non altéré, les forces d'adhésion entre le film et le second support d'extraction 50 après pelage étant telles que le film de matière à peindre 20 est séparable dudit support d'extraction 50.

On peut alors laisser l'article en l'état (Figure 3B), ou appliquer une pellicule de protection pelable 60 en lieu et place du support d'extraction 30 (Figure 4), qui peut être ou non similaire ou identique à la première pellicule 40 et qui est utile notamment pour préserver une activité d'une couche superficielle (adhésif, couche fonctionnelle) appliquée sur le film de peinture.

Avantageusement, on peut alors récupérer le support d'extraction 30 pour la réalisation d'un nouvel article, ce qui permet à nouveau d'investir davantage dans la qualité du support utilisé et ainsi améliorer la finition de l'article 1.

Dans cette forme de réalisation, on applique de préférence la face protégée initialement par le support d'extraction 30 contre le support définitif S, la face visible correspondant alors à la face protégée initialement par le support moulant 10 (et protégée, dans l'article fini illustré en figures 3B ou 4, par le second support d'extraction 50).

Pour cela, on applique un adhésif 70 sur le support définitif S ou sur la face de l'article destinée à venir en contact avec le support définitif S. Dans le cas d'un article ne comportant que le support d'extraction 30 (Figure 1 D) ou que le second support d'extraction 50 (Figure 3B), l'adhésif est appliqué de préférence contre la face libre du film décoratif. En revanche, lorsque l'article 1 comporte le support d'extraction 30 et la pellicule pelable 40 (figure 2), ou le second support d'extraction 50 et la pellicule pelable 60 (Figure 4), l'adhésif est appliqué de préférence sur la face protégée par la pellicule pelable 40 ou 60, après pelage de celle-ci.

On applique ensuite la face de l'article 1 destinée à venir en contact contre un support définitif contre le support en question. Afin d'assurer un bon positionnement et une bonne fixation de l'article, on peut par exemple maroufler celui-ci contre le support S.

Enfin, après une prise suffisante de l'adhésif, on pèle le support d'extraction 30 ou le second support d'extraction 50 (selon le mode de réalisation de l'article final), afin de ne laisser que le film décoratif contre le support définitif S.

Lorsque l'on souhaite que la face visible corresponde à la surface adjacente au support moulant 10, celui-ci peut être usiné ou traité de manière à présenter une finition de surface déterminée (en conférant au support 10 un aspect lisse, pourvu de motifs en relief (par exemple par gaufrage), brillant, satiné ou mat selon le résultat désiré), et conférer au film un aspect décoratif correspondant. On peut alors obtenir des finitions d'une précision de l'ordre du micron.

Quelle que soit la forme de réalisation, l'article en feuille 1 peut être laissé en l'état ou éventuellement subir des opérations supplémentaires, telles que l'impression de la surface libre de la matière à peindre 20 (ou le cas échéant la surface libre de la couche superficielle 22) dans une machine d'impression conventionnelle. Cette opération d'impression a alors lieu suite au retrait du support moulant 10, préalablement (le cas échéant) à l'application de la pellicule de protection 40.

En variante, l'impression est réalisée sur la surface du film qui est adjacente au support d'extraction 30. Elle est alors réalisée suite au retrait du support d'extraction 30, le cas échéant préalablement à l'application d'une pellicule de protection 50.

Le procédé selon l'invention permet de réduire les coûts dans la mesure où le(s) support(s) du produit commercial (pellicules de protection pelables 40, 60, supports d'extraction 30, 50) ont une faible valeur économique et peuvent, selon le support choisi, être recyclables, tandis que le support moulant 10, dont la finition a une influence directe sur la qualité de l'article, est conservé et peut être réutilisé. A coût égal, on peut donc obtenir un article de bien meilleure qualité.

Par ailleurs, la finition des surfaces en contact avec le support d'extraction 30 et le support moulant 10 sont également améliorées par rapport à l'état de l'art, car le support d'extraction 30 est insensible à l'eau, préservant ainsi l'état de surface des altérations, des gonflements et de la migration d'humidité vers le support moulant 10.

## Revendications

1. Procédé de fabrication d'un article (1) permettant notamment l'apposition d'un film décoratif sur un support définitif (S), qui comprend les étapes suivantes :
- prévoir un support moulant (10) présentant des caractéristiques de surface telles qu'une matière à peindre (20) puisse être appliquée sous forme d'un film directement sur ledit support moulant (10), tout en engendrant après séchage du film de matière à peindre (20) des premières forces d'adhésion contrôlées entre le support moulant (10) et le film (20),
- appliquer au moins une couche de matière à peindre (20) sur le support (10) pour former un film, et amener cette couche à sécher,
- appliquer un support d'extraction (30) sur la surface libre de la couche de matière à peindre (20), sans apport d'adhésif distinct dudit support (30), avec des deuxièmes forces d'adhésion contrôlées entre le film (20) et le support d'extraction (30),
- exercer entre le support moulant (10) et le support d'extraction (30) un effort de séparation dans des conditions telles que les premières forces d'adhésion soient inférieures aux deuxièmes forces d'adhésion, de manière à peler l'ensemble formé par le support d'extraction (30) et le film de matière à peindre (20),
- les deuxièmes forces d'adhésion après pelage étant telles que le film de matière à peindre (20) est séparable du support d'extraction (30).

2. Procédé selon la revendication 1, dans lequel la matière à peindre (20) est séchée avant l'application du support d'extraction (30).

3. Procédé selon l'une des revendications 1 à 2, dans lequel le support est réalisé dans un matériau choisi dans le groupe comprenant : le PFTE, le silicone, le polypropylène (PP), le polyéthylène (PE), le polyméthacrylate de méthyle (PMMA), le polystyrène (PS), le polycarbonate (PC), le polyéthylène téréphtalate (PET), les résines époxydes, le Polyacrylonitrile (PAN), le polyamide 66 (PA 66).

4. Procédé selon l'une des revendications 1 à 3, comprenant en outre une étape d'ajustement des forces d'adhésion entre la couche de matière à peindre (20) et le support moulant (10) et/ou entre la couche de matière à peindre et le support d'extraction (30) par traitement préalable du support.

5. Procédé selon l'une des revendications 1 à 4, dans lequel les premières forces d'adhésion sont inférieures aux deuxièmes forces d'adhésion avant séparation.

6. Procédé selon l'une des revendications 1 à 5, comprenant en outre une étape d'ajustement des forces d'adhésion entre la couche de matière à peindre (20) et le support moulant (10) et/ou entre la couche de matière à peindre (20) et le support d'extraction (30) par déformation au cours d'un transport de la couche de matière à peindre portée par le support.

7. Procédé selon l'une des revendications 1 à 6, dans lequel le support d'extraction (30) est un film plastique intégrant un adhésif présentant une pégosité déterminant les deuxièmes forces d'adhésion, et le support d'extraction (30) est appliqué par lamination ou par calandrage sur la couche de matière à peindre (20).

8. Procédé selon l'une des revendications 1 à 7, dans lequel le support d'extraction (30) est réalisé dans un matériau présentant des propriétés d'adhésion limitées en présence de chaleur, et l'application dudit support sur le film est réalisée dans une calandre chauffante à une température inférieure à une limite prédéterminée.

9. Procédé selon la revendication 8, lequel comprend en outre une étape préalable d'impression du support d'extraction (30) avec une encre sublimable, ladite encre étant transférée sur le film de matière à peindre sous l'effet de la calandre chauffante.

10. Procédé l'une des revendications 1 à 9, comprenant en outre le recyclage du support moulant (10) pour une nouvelle mise en oeuvre du procédé.

11. Procédé selon l'une des revendications 1 à 10, comprenant en outre une étape d'application d'un second support d'extraction (50) sur la face libre de l'ensemble opposée au support d'extraction (30), ledit second support d'extraction (50) présentant des troisièmes forces d'adhésion contrôlées avec le film (20).

12. Procédé selon la revendication 11, comprenant en outre une étape de retrait du support d'extraction (30) en exerçant entre les deux supports d'extraction (30, 50) un effort de séparation dans des conditions telles que les deuxièmes forces d'adhésion entre le support d'extraction (30) et le film (20) soient inférieures aux troisièmes forces d'adhésion entre le second support d'extraction (50) et le film (20), de manière à peler l'ensemble formé par le second support d'extraction (50) et le film de matière à peindre (20), les troisièmes forces d'adhésion après pelage étant telles que le film de matière à peindre (20) est séparable du second support d'extraction (50).

13. Procédé selon l'une des revendications 11 et 12, comprenant en outre une étape d'application d'une deuxième pellicule pelable (60) sur la face du film dégagée par le retrait du support d'extraction (30).

14. Procédé selon la revendication 13, dans lequel la deuxième pellicule de protection pelable (50) comprend au moins l'un des matériaux du groupe suivant : amidon de pomme de terre, polyoléfine recouverte d'un adhésif acrylique, acide polylactique (PLA), fibres de cellulose.

15. Procédé selon l'une des revendications 11 à 14, comprenant en outre un recyclage du second support d'extraction (50) pour une nouvelle mise en oeuvre du procédé.

## Patentansprüche

1. Verfahren zur Herstellung eines Artikels (1), der insbesondere das Anbringen einer Dekorationsfolie auf einem endgültigen Träger (S) erlaubt, das folgende Schritte umfasst:
- Vorsehen eines formenden Trägers (10), der derartige Oberflächeneigenschaften aufweist, dass ein Anstreichmaterial (20) in Form einer dünnen Schicht direkt auf den genannten formenden Träger (10) aufgetragen werden kann und dabei nach dem Trocknen der dünnen Schicht aus Anstreichmaterial (20) regulierte erste Haftkräfte zwischen dem formenden Träger (10) und der dünnen Schicht oder Folie (20) erzeugt,
- Auftragen mindestens einer Schicht Anstreichfarbe (20) auf den Träger (10) zur Ausbildung einer Folie und Trocknen dieser Schicht,
- Anlegen eines Entnahmeträgers (30) an die freie Oberfläche der Schicht aus Anstreichmaterial (20) ohne anderen Zusatz von Klebstoff, als den genannten Träger (30), mit regulierten zweiten Haftkräften zwischen der Folie (20) und dem Entnahmeträger (30),
- Ausüben einer Ablösungskraft zwischen dem formenden Träger (10) und dem Entnahmeträger (30) in der Weise, dass die ersten Haftkräfte kleiner sind, als die zweiten Haftkräfte, derart dass die Einheit aus dem Entnahmeträger (30) und der Folie aus Anstreichmaterial (20) abgezogen wird,
- wobei die zweiten Haftkräfte nach dem Abziehen derart sind, dass die Folie aus Anstreichmaterial (20) vom Entnahmeträger (30) ablösbar ist.

2. Verfahren nach Patentanspruch 1, in dem das Anstreichmaterial (20) vor dem Anlegen des Entnahmeträgers (30) getrocknet wird.

3. Verfahren nach einem der Patentansprüche 1 bis 2, in dem der Träger aus einem Material besteht, ausgewählt aus der Gruppe, umfassend: PTFE, Silikon, Polypropylen (PP), Polyethylen (PE), Polymethylmethacrylat (PMMA), Polystyrol, Polycarbonat (PC), Polyethylenterephtalat (PETP), die Epoxidharze, Polyacrylnitril (PAN), Polyamid 66 (PA 66).

4. Verfahren nach einem der Patentansprüche 1 bis 3, außerdem einen Schritt zur Regulierung der Haftkräfte zwischen der Schicht aus Anstreichmaterial (20) und dem formenden Träger (10) und/oder zwischen der Schicht aus Anstreichmaterial und dem Entnahmeträger (30) durch vorherige Behandlung des Trägers umfassend.

5. Verfahren nach einem der Patentansprüche 1 bis 4, in dem vor der Ablösung die ersten Haftkräfte schwächer sind, als die zweiten Haftkräfte.

6. Verfahren nach einem der Patentansprüche 1 bis 5, außerdem einen Schritt zur Regulierung der Haftkräfte zwischen der Schicht aus Anstreichmaterial (20) und dem formenden Träger (10) und/oder zwischen der Schicht aus Anstreichmaterial und dem Entnahmeträger (30) durch Verformung im Verlauf eines Transportes der vom Träger getragenen Schicht aus Anstreichmaterial umfassend.

7. Verfahren nach einem der Patentansprüche 1 bis 6, in dem der Entnahmeträger (30) eine Kunststofffolie ist, die einen Klebstoff enthält, der eine Klebrigkeit aufweist, die die zweiten Haftkräfte determiniert, und der Entnahmeträger (30) durch Walzen oder Kalandrieren auf die Schicht aus Anstreichmaterial (20) aufgetragen wird.

8. Verfahren nach einem der Patentansprüche 1 bis 7, in dem der Entnahmeträger (30) aus einem Material besteht, das bei Wärme über begrenztes Haftvermögen verfügt, und das Anlegen des genannten Trägers auf die Folie in einem Heißkalander bei einer Temperatur erfolgt, die unter einer vorher festgelegten Grenze liegt.

9. Verfahren nach Patentanspruch 8, das außerdem einen vorherigen Schritt der Imprägnierung des Entnahmeträgers (30) mit einer sublimierbaren Tinte umfasst, wobei die genannte Tinte unter der Wirkung des Heißkalanders auf die Folie aus Anstreichmaterial übertragen wird.

10. Verfahren nach einem der Patentansprüche 1 bis 9, außerdem die Rückgewinnung des formenden Trägers (10) für eine neue Ausführung des Verfahrens umfassend.

11. Verfahren nach einem der Patentansprüche 1 bis 10, außerdem einen Schritt des Anlegens eines zweiten Entnahmeträgers (50) an die freie, vom Entnahmeträger (30) abgewandte Seite der Einheit, wobei der genannte zweite Entnahmeträger (50) dritte regulierte Haftkräfte gegenüber der Folie (20) aufweist.

12. Verfahren nach Patentanspruch 11, das außerdem einen Schritt der Abnahme des Entnahmeträgers (30) durch Ausüben einer Ablösungskraft zwischen den beiden Entnahmeträgern (30, 50) in der Weise, dass die zweiten Haftkräfte zwischen dem Entnahmeträger (30) und der Folie (20) kleiner sind, als die dritten Haftkräfte zwischen dem zweiten Entnahmeträger (50) und der Folie (20), derart dass die Einheit aus dem zweiten Entnahmeträger (50) und der Folie aus Anstreichmaterial (20) abgezogen wird, umfasst, wobei die dritten Haftkräfte nach dem Abziehen derart sind, dass die Folie aus Anstreichmaterial (20) vom zweiten Entnahmeträger (50) ablösbar ist.

13. Verfahren nach einem der Patentansprüche 11 und 12, außerdem einen Schritt des Anlegens einer zweiten abziehbaren Folie (60) an die Seite der Folie, die durch das Abnehmen des Entnahmeträgers (30) freigelegt wurde, umfassend.

14. Verfahren nach Patentanspruch 13, in dem die abziehbare zweite Schutzfolie (50) mindestens eins der Materialien der folgenden Gruppe umfasst: Kartoffelstärke, mit einem Acrylklebstoff beschichtetes Polyolefin, Polylactid (PLA), Zellulosefasern.

15. Verfahren nach einem der Patentansprüche 11 bis 14, außerdem eine Rückgewinnung des zweiten Entnahmeträgers (50) für eine neue Ausführung des Verfahrens umfassend.

## Claims

1. A method for manufacturing an article (1) allowing in particular the application of a decorative film onto a final support (S), comprising the following steps:
- providing a casting support (10) having surface characteristics such that a paint material (20) can be applied in the form of a film directly on said casting support (10), while generating after drying of the paint material film (20) first controlled adhesion forces between the casting support (10) and the film (20),
- applying a at least one layer of paint material (20) onto the support (10) to form a film, and cause this layer to dry,
- applying an extraction support (30) onto the free surface of the paint material layer (20), without adding an adhesive distinct from said support (30), with second controlled adhesion forces between the film (20) and the extraction support (30),
- exerting between the casting support (10) and the extraction support (30) a separation effort in conditions such that the first adhesion forces are lower than the second adhesion forces, so as to peel off the assembly made of the extraction support (30) and the paint material film (20),
- the second adhesion forces after peeling off being such that the paint material film (20) can be separated from the extraction support (30).

2. A method according to claim 1, wherein the paint material (20) is dried before the extraction support (30) is applied.

3. A method according to any one of claims 1 to 2, wherein the support is made from a material selected from the group including: PFTE, silicone, polypropylene (PP), le polyethylene (PE), polymethyl-methacrylate (PMMA), polystyrene (PS), polycarbonate (PC), polyethylene terephtalate (PET), epoxide resins, polyacrylonitrile (PAN), polyamide 66 (PA 66).

4. A method according to any one of claims 1 to 3, further comprising a step of adjusting the adhesion forces between the paint material layer (20) and the casting support (10) and/or between the paint material layer and the extraction support (30) by preliminary treatment of the support.

5. A method according to any one of claims 1 to 4, wherein the first adhesion forces are lower than the second adhesion forces before separation.

6. A method according to any one of claims 1 to 5, further comprising a step of adjusting the adhesion forces between the paint material layer (20) and the casting support (10) and/or between the paint material layer (20) and the extraction support (30) by deformation during transportation of the paint material layer carried by the support.

7. A method according to any one of claims 1 to 6, wherein the extraction support (30) is a plastic film integrating an adhesive having a tack property which determines the second adhesion forces, and the extraction support (30) is applied by lamination or by roller pressing on the paint material layer (20).

8. A method according to any one of claims 1 to 7, wherein the extraction support (30) is made of a material having adhesion properties which are limited in presence of heat, and the application of said support onto the film is made in a heating press roller at a temperature lower than a predetermined limit.

9. A method according to claim 8, further comprising a preliminary step of printing the extraction support (30) with an ink capable of sublimation, said ink being transferred onto the paint material film by virtue of the heating press roll.

10. A method according to any one of claims 1 to 9, further comprising recycling the casting support (10) for another performance of the method.

11. A method according to any one of claims 1 to 14, further comprising a step of applying a second extraction support (50) onto the free surface of the assembly opposite the extraction support (30), said second extraction support (50) having third controlled adhesion forces with the film (20).

12. A method according to claim 11, further comprising a step of removing the extraction support (30) by exerting between the two extraction supports (30, 50) a separation effort in conditions such that the second adhesion forces between the extraction support (30) and the film (20) are lower than the third adhesion forces between the second extraction support (50) and the film, so as to peel off the assembly made of the second extraction support (50) and the paint material film (20), the third adhesion forces after peeling off being such that the paint material film (20) can be separated from the second extraction support (50).

13. A method according to any one of claims 11 and 12, further comprising a step of applying a second pelable thin sheet (60) onto the film surface exposed when the extraction support (30) is removed.

14. A method according to claim 13, wherein the second pelable protection thin sheet (50) includes at least one of the materials of the following group: potato starch, polyolefin covered with an acrylic adhesive, polylactic acid (PLA), cellulose fibers.

15. A method according to any one of claims 11 to 14, further comprising recycling the second extraction support (50) for another performance of the method.
